# EUROPEAN PATENT SPECIFICATION

(11) **EP 3 434 094 B1**
(45) Date of publication and mention of the grant of the patent: **30.12.2020**
(21) Application number: 18175074.6
(22) Date of filing: 30.05.2018
(51) Int. Cl.: A01D 34/416, A01D 34/73

(54) **CUTTING HEAD FOR AN EDGE TRIMMER**
SCHNEIDKOPF FÜR EINEN KANTENTRIMMER
TÊTE DE COUPE POUR COUPE-BORDURE

(30) Priority: 24.07.2017 IT 201700084226
(43) Date of publication of application: 30.01.2019
(73) Proprietor: Tecomec S.r.l., 42124 Reggio Emilia (IT)
(72) Inventor: CIGARINI, Enrico, 42123 REGGIO EMILIA (IT)
(74) Representative: Casadei, Giovanni

(56) References cited:
- CN-A- 105 830 622
- US-A1- 2007 180 706
- US-A1- 2012 260 508
- US-A1- 2015 289 445

## Description

The object of the present invention is a cutting head for an edge trimmer.

An edge trimmer normally comprises a cutting head, operated in rotation around a main axis, with which one or more cutting elements are associated. These cutting elements, at least during rotation of the head, are arranged radially and cut the blades of grass or other vegetation with which they come into contact.

The cutting elements of a type that is currently on the market generally comprise a cutting portion with which a coupling portion is associated. This coupling portion is set up to enable the cutting element to be coupled with a coupling pin that is integral with the head.

In cutting elements of known type, the coupling portion is generally in the shape of a ring or another shape that, in order to permit fitting onto the coupling pin, requires at least one part of the head to be removed and/or moved.

For this purpose, currently available heads comprise a lower shell, which is intended to face the ground during use, and an upper shell. The coupling pins are integral with the lower shell and protrude from the latter, with a free end facing the upper shell.

The two shells can slide in relation to one another, along the rotation axis of the head, between a working position and a change position. In the working position, the two shells are closer to one another and the ends of the coupling pins are closed in respective seats. In this position, the cutting elements cannot be removed from the coupling pins. In the change position, the two shells are moved away from one another so as to free the end of the coupling pins. In this position, the cutting elements can be removed or positioned on the coupling pins.

Current heads are provided with hooking mechanisms that maintain the fixed shells in the working position to avoid undesired opening during operation of the edge trimmer. However, these mechanisms are rather inconvenient to operate at the moment of the change of the cutting elements, and are subject to jamming in the presence of dirt.

In the current heads, the change of the cutting elements is carried out by resting the edge trimmer on the ground in the zone of the motor and pointing the head upwards. In this position of the head, the free ends of the coupling pins face downwards (because the coupling pins are integral with the lower shell that, with the head facing upwards, also faces upwards). The cutting elements can thus become detached from the coupling pins through gravity and thus drop undesirably to the ground. Obviously, also the replacement cutting elements tend to become detached by gravity from the coupling pins, making fitting and the correct reclosure of the head difficult, with the consequent risk that if they are not fitted correctly the cutting elements may be projected in a radial direction during rotation of the head. Further, often, removing the parts that are necessary to fitting the cutting elements is relatively laborious. Examples of prior art cutting heads of the type above are disclosed in documents US2007/180706, US2012/260508 and US2015/289445.

The object of the present invention is to provide a cutting head for edge trimmers that enables the drawbacks of currently available heads to be overcome.

The present invention provides a cutting head for an edge trimmer according to appended claim 1. Preferred aspects are defined in the dependent claims.

Characteristics and advantages of the present invention will more fully emerge from the following detailed description of an embodiment of the invention, as illustrated in a non-limiting example in the accompanying drawings, in which:

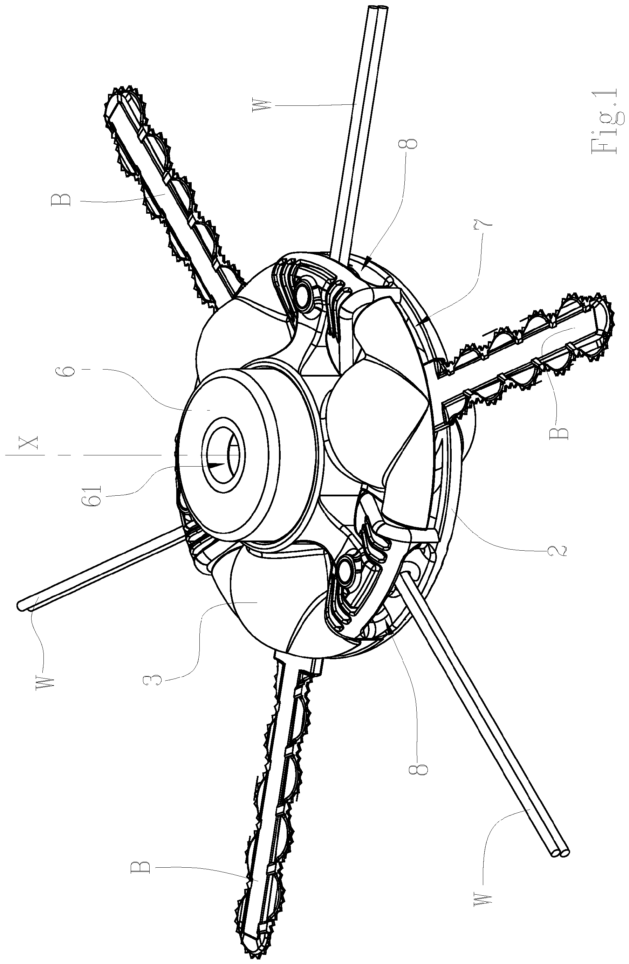

- figure 1 shows an isometric view of a head according to the present invention, provided with cutting elements (B,W);

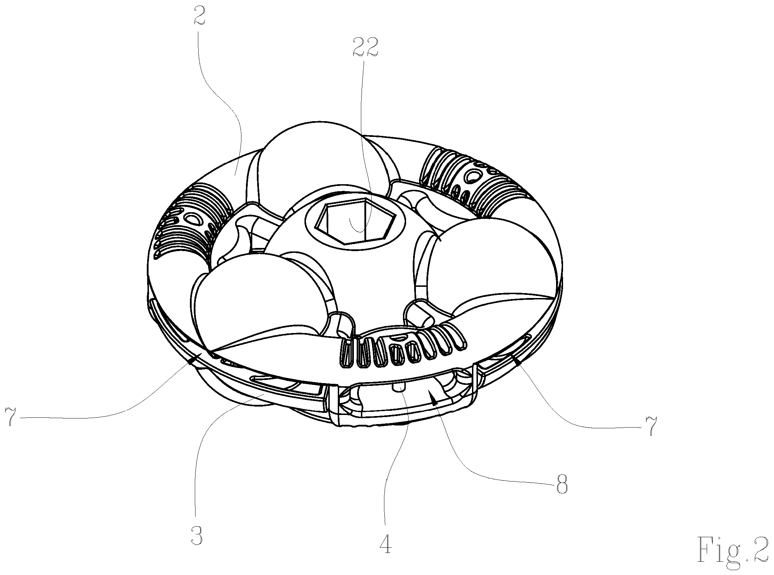

- figure 2 shows an isometric view of the head of figure 1 that is upturned and devoid of cutting elements;
- figure 3 shows the head of figure 2 in a change position of the cutting elements (B,W);

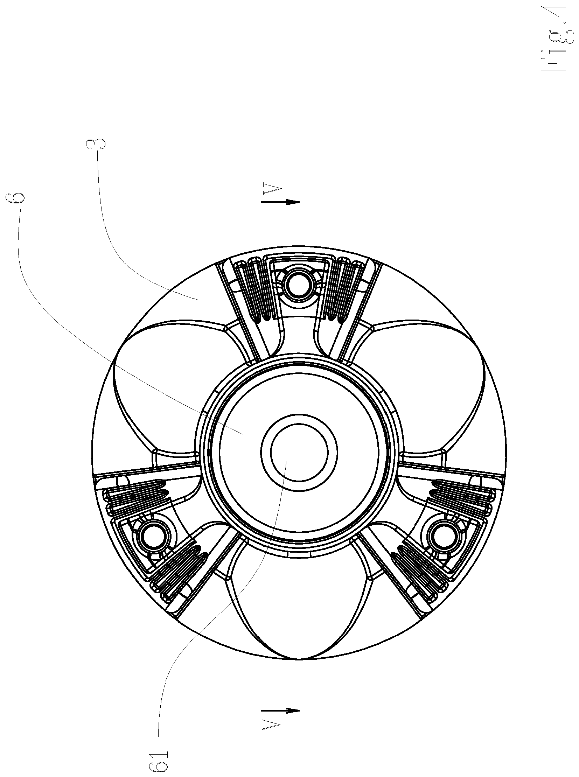

- figure 4 shows a top view of the head according to the present invention;

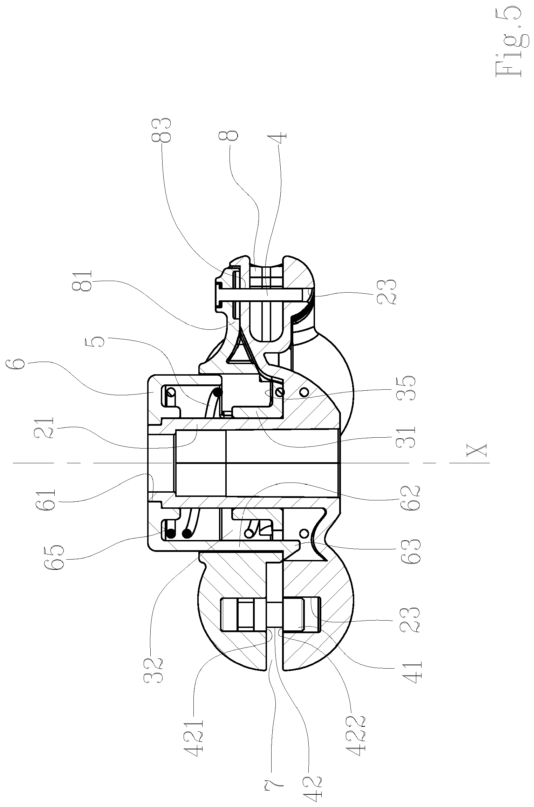

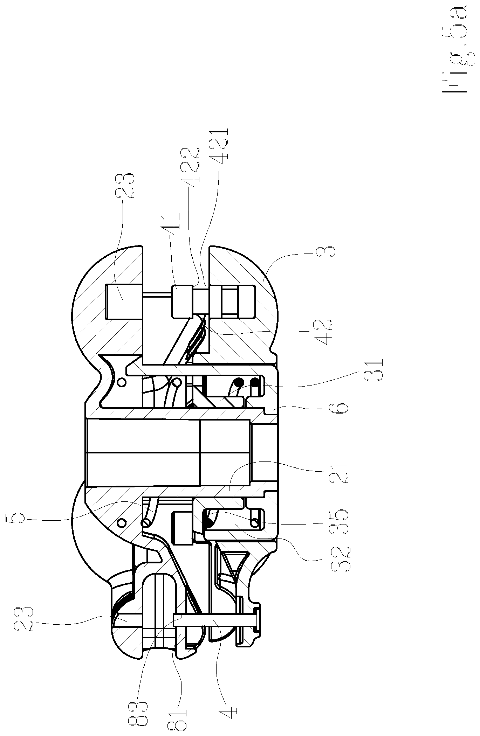

- figure 5 shows a section view according to the V-V plane of figure 4;
- figure 5a shows the head of figure 5 in a change configuration of the cutting elements;
- figure 6 shows a top view of a cutting element (B) in the shape of a blade.

The cutting head according to the present invention comprises a lower shell (2) and an upper shell (3) that are integral with one another with respect to the rotation around a rotation axis (X). In normal use of the edge trimmer, the lower shell (2) faces downwards, whereas the upper shell (3) faces the motor of the edge trimmer.

One of the two shells is integral in rotation with the drive shaft of the edge trimmer. In the represented non-exclusive solution, it is the lower shell (2) that is intended to be coupled with the drive shaft. The lower shell (2) is provided with an axial body (21), which is concentric to the rotation axis (X), set up for being inserted through a prismatic coupling into a seat (31) of the upper shell (3), concentrically to the rotation axis (X). Hooking means is associated with the axial body (21) to enable an edge trimmer to be connected to the drive shaft. Such a hooking means comprises for example a hole or a threaded insert, arranged in the axial body (21) concentrically on the rotation axis (X), for example in a seat (22). The threaded insert could for example be in the shape of a hexagonal nut. The head further comprises two or more coupling pins (4), associated with the shells (2,3) and set up to enable respective cutting elements (B,W) to be coupled.

At least one side portion of each coupling pin (4) is accessible from the outside of the head through a respective side opening (7,8). Each opening (7,8) enables at least one portion of the head of the cutting element fastened to the pin (4) to be made to protrude outside the head.

Advantageously, the shells (2,3) are slidable in relation to one another along the rotation axis (X) between an operating position, in which they are nearer one another, and a change position, in which they are further apart from one another. In the change position, a free end (41) of the coupling pins (4), is accessible to enable a cutting element (B,W) to be inserted or extracted. In the operating position, the free end (41) is on the other hand inaccessible, as the cutting elements cannot become detached from their own coupling pin (4).

The head comprises an elastic pusher (5), for example an helical spring, set up to push the lower shell (2) and the upper shell (3) to the operating position. The sliding of the shells (2,3) is guided by the prismatic coupling between the axial body (21) and the seat (31). By this coupling, the axial body (21) can slide within the seat (31), without rotating with respect to the latter, along the rotation axis (X).

The possibility for the shells (2, 3) to adopt the change position significantly facilitates the replacement of the cutting elements. In fact, in the change position the free end (41) of the coupling pins (4) is accessible.

This enables the cutting elements to be inserted and removed with extreme facility. Further, the presence of the elastic pusher (5) enables the shells (2,3) to be maintained in the operating position, without the need for further complex hooking mechanisms or devices between the two shells, and the shells to be taken to the change position by simply exerting a force that is the contrary to that of the elastic pusher (5).

The possibility of the shells (2,3) adopting the change position makes replacement of the cutting elements (B) in the shape of a blade particularly easy. A cutting element (B) of this type comprises an engagement zone (C) with which a cutting part (T) is associated that is intended to protrude from the shells (2,3) through one of the side openings (7,8). The engagement zone (C) comprises a through hole (C1,C2), intended to be fitted to a coupling pin (4). The cutting element (B) can rotate around its coupling pin (4). The cutting element (B) can thus be replaced by sliding the through hole (C1,C2) along the coupling pin (4).

Preferably, but not necessarily, the coupling pins (4) are integral with the upper shell (3) and, in the change position of the shells (2,3), have the free end (41) facing the lower shell (2) and accessible to enable a cutting element (B,W) to be inserted or extracted. Connecting the coupling pins (4) with the upper shell (3) determines a very advantageous condition for the change of the cutting elements. In fact, by making the head face upwards, as occurs normally to make the change, the coupling pins (4) have the free end (41) facing upwards. In this manner, during the change the cutting elements (B,W) are not detached by gravity from the coupling pins (4).

In order to make the end (41) of the coupling pins (4) inaccessible in the operating position of the shells (2,3), the lower shell (2) comprises two or more seats (23) each of which is set up to receive the free end (41) of a respective pin. In this manner, in the operating position of the shells (2,3) each free end (41) is at least partially recessed in its seat (23) and prevents the cutting element from becoming detached. Further, the seats (23) prevent flexure of the respective coupling pin (4).

In the solution shown, the head comprises a coupling body (6), set up to be fastened axially to the lower shell (2) so as not to be able to slide in relation to the latter along the rotation axis (X). For this purpose, the coupling body (6) has a through hole (61), which is concentric to the rotation axis (X), to permit the transit of the end of the drive shaft of the edge trimmer. The through hole (61) is configured for being fitted to the end of the axial body (21) and settling on one shoulder of the latter. When the lower shell (2) is fastened to the drive shaft, the coupling body (6) is locked with respect to sliding along the rotation axis (X).

The upper shell (3) is provided with a housing (32) in which the coupling body (6) can be arranged at least partially. The housing (32) is provided on the bottom with openings to enable two or more appendages (62) of the coupling body (6) to transit and slide. These appendages (62), which are arranged substantially parallel to the rotation axis (X), are provided with a shaped end (63) to be able to hook onto a set surface of the upper shell (3). The upper shell (3) can slide axially, or along the rotation axis (X), with respect to the coupling body (6). In the operating position, the upper shell (3) is arranged resting on the shaped ends (63), whereas in the change position it is spaced away from the shaped ends (63).

The elastic pusher (5) is interposed between the coupling body (6) and the upper shell (3). Preferably, but not necessarily, the coupling body (6) is hollow and the interior thereof houses the elastic pusher (5). The elastic pusher (5) is compressed between an internal surface (65) of the coupling body (6) and a support surface (35) of the upper shell (3), concentrically to the seat (31).

Advantageously, at least one coupling pin (4) has a peripheral groove (42) that has a shoulder intended to receive the engagement zone (C) of a cutting element (B,W), such as to prevent sliding of the engagement zone (C) along the coupling pin (4). This peripheral groove (42) is substantially an annular recess obtained on the side surface of the coupling pin (4).

The peripheral groove (42) is located in an intermediate zone of the coupling pin (4) and forms two opposite shoulders (421,422) intended for opposing sliding of the engagement zone (C) along the coupling pin (4). The shoulders (421,422) are oriented substantially perpendicularly to the rotation axis (X).

The presence of the peripheral groove (42) enables the cutting element (B) to be locked with respect to sliding along the coupling pin (4) during rotation of the head. In fact, through the effect of the centrifugal force (F) to which the cutting element (B) is subjected, the cutting element (B) is pushed radially away from the rotation axis (X). This means that the engagement zone (C) is pressed inside the peripheral groove (42) and is locked by the sides of the peripheral groove (42), or by the shoulders (421, 422), with respect to sliding along the coupling pin (4). In this manner, the stress that occurs when there are blows with the ground and which tend to tilt and/or move the cutting element (B) with respect to the rotation plane that is perpendicular to the rotation axis (X), produces exclusively flexure of the cutting element (B). The danger is thus avoided that the cutting element (B), by sliding along the coupling pin (4), may come into contact with the edge of the shells (2,3), forcing the shells (2,3) to widen dangerously. This enables the use of complex hooking mechanisms or devices between the two shells (2,3) to be avoided and the thrust exerted by the elastic pusher (5) to be lightened.

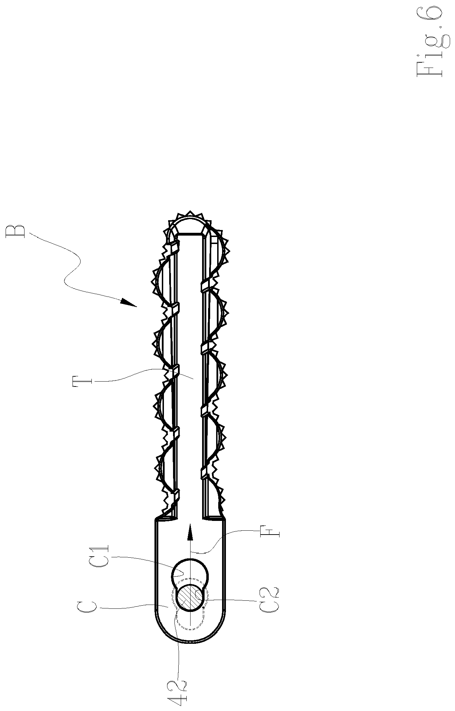

As shown in figure 6, in order to make the coupling between the peripheral groove (42) and the engagement zone (C) more solid, the through hole of the latter is provided with, has a structured section with a first portion (C1) and a second portion (C2). The first portion (C1) has a cylindrical conformation with a diameter that is slightly greater than the maximum diameter of the coupling pin (4), or greater than the diameter of the free end (41). The second portion (C2) has an elongated shape with a width that is slightly greater than the diameter of the groove (42). The first portion is arranged in a radial position that is further from the rotation axis (X) with respect to the second portion. In this manner, during rotation of the head, through the effect of the centrifugal force, the cutting element (B) slides radially, bringing the second portion of the through hole into contact with the groove (42). The sides of the peripheral groove (42), or the shoulders (421,422), have a maximum diameter that is greater than the width of the second portion (C2) of the through hole, such that they prevent any translation along the coupling pin (4).

As already indicated previously, the shells (2,3) are shaped to define, in the operating position, two or more side openings (7,8), facing the outside of the head, one of the coupling pins (4) facing each side opening (7,8). At least one of the openings (8) comprises an upper wall (81), which is integral with the lower shell (2) by a side wall (82). The upper wall (81) is provided with a through opening (83) through which a coupling pin (4) is arranged. In substance, the side wall (82) and the upper wall (81) define a niche, which is integral with the lower shell (3), within which a coupling pin (4) is arranged.

During movement of the shells (2,3) from the operating position to the change position, the pin (4) runs through the upper wall (81) and disengages from the seat (23). The cutting element (W) fitted to the pin (4) stops on the other hand in contact with the upper wall (81), detaching from the pin (4). Removal of the cutting element (W) is thus substantially automatic.

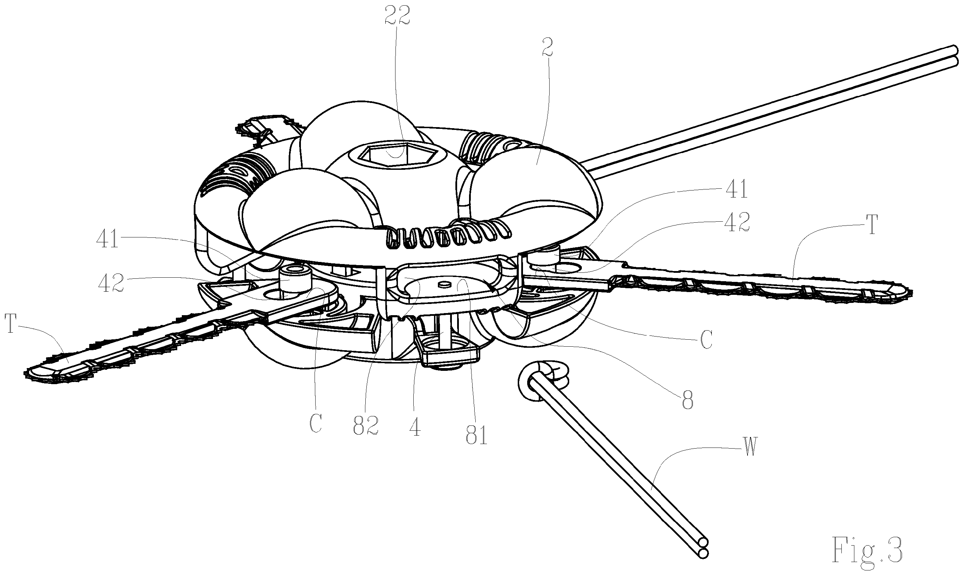

The configuration of the opening (8) provided with an upper wall (81) which is integral with the lower shell (2) is particularly advantageous for replacing a cutting element (W) in the form of a flexible wire. This cutting element (W) can in fact be connected to the coupling pin (4) by means of a loop (figure 3) that, through the effect of the centrifugal force, tightens significantly. In the absence of the upper wall (81), which enables the loop to be removed axially from the coupling pin (4) during movement of the shells from the operating position to the change position, it would be necessary to loosen or undo the loop, which is rather a fiddly task for the user. Further, the upper wall (81) contributes to guiding and stiffening the coupling pin (4).

In the embodiment shown, the head according to the present invention alternates openings (8) provided with an upper wall (81) with openings (7) not provided with an upper wall. For example, it is possible to alternate three openings (8) provided with an upper wall (81) with three openings (7) that are not provided with an upper wall, with an angular pitch of about 60°. The openings (8) with an upper wall (81) each house a cutting element (W) in the shape of a narrow wire with a loop around the coupling pin (4) thereof. The openings (7) that are not provided with an upper wall each house a cutting element (B) in the form of a blade inserted into its coupling pin (4) which is preferably provided with a peripheral groove (42). Obviously, solutions are possible with a different number and a different arrangement of the openings (7,8), and/or solutions with openings and coupling pins (4) of a single type.

## Claims

1. A cutting head for an edge trimmer, comprising:
a lower shell (2) and an upper shell (3), at least one of which is associable with the drive shaft of a hedge trimmer to be operated in rotation around a rotation axis (X);
two or more coupling pins (4), associated with the shells (2,3) and set up to enable respective cutting elements (B,W) to be coupled;
wherein the shells (2,3) are slidable in relation to one another along the rotation axis (X) between an operating position, in which they are alongside one another, and a change position, in which they are at least partially separated from one another; wherein the coupling pins (4), in the change position, have a free end (41) that is accessible to enable a cutting element (B,W) to be inserted or extracted;
an elastic pusher (5) that is set up for pushing the lower shell (2) and the upper shell (3) to the operating position;
**characterised in that:**
the lower shell (2) is provided with an axial body (21), which is concentric to the rotation axis (X), set up for being inserted through a prismatic coupling into a seat (31) of the upper shell (3), concentrically to the rotation axis (X);
the shells (2,3) are guided in sliding by the prismatic coupling between the axial body (21) and the seat (31), such that the axial body (21) can slide within the seat (31), without rotating with respect to the latter, along the rotation axis (X);
in any position between the operating position and the change position, the shells (2,3) are always integral with one another with respect to the rotation around the rotation axis (X).

2. The cutting head according to claim 1, wherein at least one coupling pin (4) has a peripheral groove (42) that forms at least one shoulder intended to receive an engagement zone (C) of a cutting element (B,W) and prevent sliding of the engagement zone (C) along the coupling pin (4).

3. The head according to claim 2, wherein the peripheral groove (42) is located in an intermediate zone of the coupling pin (4) and forms two opposite shoulders (421,422) intended for opposing sliding of the engagement zone (C) along the coupling pin (4).

4. The head according to claim 1, wherein the coupling pins (4) are integral with the upper shell (3) and, in the change position of the shells (2,3), have the free end (41) facing the lower shell (2) and accessible to enable a cutting element (B,W) to be inserted or extracted.

5. The head according to claim 4, wherein the lower shell (2) comprises two or more seats (23), each of which is set up for receiving the free end (41) of a respective pin.

6. The head according to claim 1, wherein the shells (2,3) are shaped to define, in the operating position, two or more side openings (7,8), facing the outside of the head, each of which receives a respective coupling pin (4).

7. The head according to claim 6, wherein at least one opening (8) comprises an upper wall (81), that is integral with the lower shell (2), which is provided with a through opening through which one coupling pin (4) is arranged.

8. The head according to claim 1, comprising a coupling body (6), slidable along the rotation axis (X) with respect to the upper shell (3), wherein the elastic pusher (5) is interposed between the coupling body (6) and the upper shell (3).

9. The head according to claim 8 wherein the upper shell (3) is provided with a housing (32) in which the coupling body (6) and the elastic pusher (5) can be arranged at least partially.

## Patentansprüche

1. Schneidkopf für einen Kantentrimmer, umfassend:
eine untere Schale (2) und eine obere Schale (3), von denen mindestens eine mit der Antriebswelle eines Kantentrimmers assoziierbar ist, zu betätigen in Drehung rund um eine Rotationsachse (X);
zwei oder mehr Kupplungszapfen (4), die mit den Schalen (2, 3) assoziiert und eingerichtet sind, um jeweilige zu kuppelnde Schneidelemente (B, W) zu aktivieren,
wobei die Schalen (2, 3) zueinander entlang der Rotationsachse (X) zwischen einer Betriebsposition, in der sie nebeneinander angeordnet sind, und einer Wechselposition, in der sie zumindest teilweise voneinander getrennt sind, verschiebbar sind, wobei die Kupplungszapfen (4) in der Wechselposition ein freies Ende (41) aufweisen, das zugänglich ist, um zu erlauben, dass ein Schneidelement (B, W) eingefügt oder herausgezogen wird;
einen elastischen Schieber (5), der eingerichtet ist, um die untere Schale (2) und die obere Schale (3) in die Betriebsposition zu schieben,
**dadurch gekennzeichnet, dass**
die untere Schale (2) mit einem axialen Körper (21), versehen ist, der konzentrisch zur Rotationsachse (X) ist und eingerichtet ist, um durch eine prismatische Kupplung in einen Sitz (31) der oberen Schale (3) konzentrisch zur Rotationsachse (X) eingefügt zu werden;
die Schalen (2, 3) schiebend von der prismatischen Kupplung zwischen dem axialen Körper (21) und dem Sitz (31) geführt werden, sodass der axiale Körper (21) innerhalb des Sitzes (31) entlang der Rotationsachse (X) gleiten kann, ohne sich zu diesem zu drehen;
die Schalen (2, 3) in jeder beliebigen Position zwischen der Betriebsposition und der Wechselposition stets einstückig miteinander zur Drehung rund um die Rotationsachse (X) verbunden sind.

2. Schneidkopf nach Anspruch 1, wobei mindestens ein Kupplungszapfen (4) eine Umfangsnut (42) aufweist, die mindestens eine Schulter formt, die dazu bestimmt ist, eine Eingriffszone (C) des Schneidelements (B, W) aufzunehmen und das Verschieben der Eingriffszone (C) entlang des Kupplungszapfens (4) zu verhindern.

3. Kopf nach Anspruch 2, wobei die Umfangsnut (42) in einer Zwischenzone des Kupplungszapfens (4) befindlich ist und zwei gegenständige Schultern (421, 422) bildet, die dazu bestimmt sind, dem Verschieben der Eingriffszone (C) entlang des Kupplungszapfens (4) entgegenzuwirken.

4. Kopf nach Anspruch 1, wobei die Kupplungszapfen (4) einstückig mit der oberen Schale (3) verbunden sind und in der Wechselposition der Schalen (2, 3) so angeordnet sind, dass das freie Ende (41) der unteren Schale (2) zugewandt und zugänglich ist, um zu erlauben, dass ein Schneidelement (B, W) eingefügt oder herausgezogen wird.

5. Kopf nach Anspruch 4, wobei die untere Schale (2) zwei oder mehrere Sitze (23) umfasst, von denen ein jeder eingerichtet ist, um das freie Ende (41) eines jeweiligen Zapfens aufzunehmen.

6. Kopf nach Anspruch 1, wobei die Schalen (2, 3) ausgeformt sind, um in der Betriebsposition zwei oder mehr Seitenöffnungen (7, 8) zu definieren, die der Außenseite des Kopfs zugewandt sind, von denen eine jede einen jeweiligen Kupplungszapfen (4) aufnimmt.

7. Kopf nach Anspruch 6, wobei mindestens eine Öffnung (8) eine obere Wand (81) umfasst, die einstückig mit der unteren Schale (2) verbunden ist, die mit einer Durchführungsöffnung versehen ist, durch die ein Kupplungszapfen (4) angeordnet ist.

8. Kopf nach Anspruch 1, umfassend einen Kupplungskörper (6), der entlang der Rotationsachse (X) zur oberen Schale (3) verschiebbar ist, wobei der elastische Schieber (5) zwischen dem Kupplungskörper (6) und der oberen Schale (3) eingesetzt ist.

9. Kopf nach Anspruch 8, wobei die obere Schale (3) mit einem Gehäuse (32) versehen ist, in dem der Kupplungskörper (6) und der elastische Schieber (5) zumindest teilweise angeordnet werden können.

## Revendications

1. Tête de coupe pour coupe-bordure, comprenant :
une coque inférieure (2) et une coque supérieure (3), dont au moins une est associable à l'arbre d'entraînement d'un coupe-bordure devant fonctionner en rotation autour d'un axe de rotation (X) ;
deux ou plusieurs pivots d'accouplement (4), associées aux coques (2,3) et disposées de manière à permettre l'accouplement des éléments coupants respectifs (B,W) ;
dans laquelle les coques (2, 3) peuvent coulisser l'une par rapport à l'autre le long de l'axe de rotation (X) entre une position de fonctionnement, dans laquelle elles sont côte à côte, et une position de changement, dans laquelle elles sont au moins partiellement séparées l'une de l'autre ; dans laquelle les pivots d'accouplement (4), en position de changement, ont une extrémité libre (41) qui est accessible pour permettre l'insertion ou l'extraction d'un élément de coupe (B,W) ;
un poussoir élastique (5) qui est mis en place pour pousser la coque inférieure (2) et la coque supérieure (3) en position de fonctionnement ;
**caractérisé en ce que** :
la coque inférieure (2) est munie d'un corps axial (21), concentrique à l'axe de rotation (X), conçu pour être inséré par un accouplement prismatique dans un siège (31) de la coque supérieure (3), concentriquement à l'axe de rotation (X) ;
les coques (2,3) sont guidées en coulissement par l'accouplement prismatique entre le corps axial (21) et le siège (31), de sorte que le corps axial (21) puisse coulisser dans le siège (31), sans tourner par rapport à celui-ci, le long de l'axe de rotation (X) ;
dans toute position entre la position de fonctionnement et la position de changement, les coques (2,3) sont toujours solidaires l'une de l'autre par rapport à la rotation autour de l'axe de rotation (X).

2. Tête de coupe selon la revendication 1, dans laquelle au moins un pivot d'accouplement (4) présente une rainure périphérique (42) qui forme au moins un épaulement destiné à recevoir une zone d'engagement (C) d'un élément de coupe (B,W) et à empêcher le glissement de la zone d'engagement (C) le long du pivot d'accouplement (4).

3. Tête selon la revendication 2, dans laquelle la rainure périphérique (42) est située dans une zone intermédiaire du pivot d'accouplement (4) et forme deux épaulements opposés (421, 422) destinés à s'opposer au glissement de la zone d'engagement (C) le long du pivot d'accouplement (4).

4. Tête selon la revendication 1, dans laquelle les pivots d'accouplement (4) sont solidaires avec la coque supérieure (3) et, dans la position de changement des coques (2,3), ont l'extrémité libre (41) tournée vers la coque inférieure (2) et accessible pour permettre l'insertion ou l'extraction d'un élément de coupe (B,W).

5. Tête selon la revendication 4, dans laquelle la coque inférieure (2) comprend deux ou plusieurs sièges (23), chacun d'entre eux étant prévu pour recevoir l'extrémité libre (41) d'un pivot respectif.

6. Tête selon la revendication 1, dans laquelle les coques (2,3) sont formées pour définir, en position de fonctionnement, deux ou plusieurs ouvertures latérales (7,8), orientées vers l'extérieur de la tête, dont chacune reçoit un pivot d'accouplement respectif (4).

7. Tête selon la revendication 6, dans laquelle au moins une ouverture (8) comprend une paroi supérieure (81), qui est solidaire avec la coque inférieure (2), qui est pourvue d'une ouverture traversante à travers laquelle est disposé un pivot d'accouplement (4).

8. Tête selon la revendication 1, comprenant un corps d'accouplement (6), pouvant coulisser le long de l'axe de rotation (X) par rapport à la coque supérieure (3), dans laquelle le poussoir élastique (5) est interposé entre le corps d'accouplement (6) et la coque supérieure (3).

9. Tête selon la revendication 8, dans laquelle la coque supérieure (3) est pourvue d'un logement (32) dans lequel le corps d'accouplement (6) et le poussoir élastique (5) peuvent être disposés au moins partiellement.
